# EUROPEAN PATENT APPLICATION

(11) **EP 4 668 410 A1**
(43) Date of publication of application: **24.12.2025**
(21) Application number: 24918973.9
(22) Date of filing: 03.12.2024
(51) Int. Cl.: H01M 10/42, H01M 10/04, H01M 10/052

(54) **METHOD FOR IMPREGNATING SECONDARY BATTERY WITH ELECTROLYTE**

(30) Priority: 17.01.2024 KR 20240007636
(71) Applicant: LG Energy Solution, Ltd., Seoul 07335 (KR)
(72) Inventor: LEE, Su Ho, Daejeon 34122 (KR); AN, Jong Man, Daejeon 34122 (KR)
(74) Representative: Plasseraud IP
(86) International application number: PCT/KR2024/019574
(87) International publication number: WO 2025/154946

(57) **Abstract**

Disclosed is an electrolyte impregnation method for secondary batteries, the electrolyte impregnation method including receiving a secondary battery in a pressurization chamber and adjusting a pressure in the pressurization chamber, wherein, in the step of adjusting the pressure, a pressurization step and a pressurization release step are performed twice or more.

## Description

### [Technical Field]

This application claims the benefit of priority to Korean Patent Application No. 2024-0007636 filed on January 17, 2024, the disclosure of which is incorporated herein by reference in its entirety.

The present invention relates to an electrolyte impregnation method for secondary batteries, and more particularly to an electrolyte impregnation method for secondary batteries in which a pressurization step of pressurizing a chamber having a secondary battery received therein and a pressurization release step are alternately performed and a vacuum depressurization step in which the pressure in the chamber is adjusted below atmospheric pressure is omitted, thereby increasing the electrolyte impregnation rate, and the waiting time of each step is reduced, thereby improving the efficiency of an impregnation process.

### [Background Art]

Secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel cadmium battery, a nickel hydride battery, and a nickel zinc battery as battery cells that are presently widely used. In general, a plurality of unit secondary battery cells may be connected to each other in series or in parallel to constitute a battery module depending on required output voltage or charge and discharge capacities.

Meanwhile, depending on the shape of a battery case, a lithium secondary battery may be classified as a can-shaped secondary battery having an electrode assembly mounted in a metal can or a pouch-shaped secondary battery an electrode assembly mounted in a pouch made of an aluminum laminate sheet.

The lithium secondary battery is manufactured by inserting an electrode assembly including a positive electrode, a negative electrode, and a separator interposed between the positive electrode and the negative electrode into a battery case and injecting an electrolyte in a liquid state, i.e., an electrolyte solution, into the battery case.

The injected electrolyte permeates between the positive electrode, the negative electrode, and the separator constituting the electrode assembly according to capillary action, but impregnation of the electrolyte is not easy due to the nature of the porous separator, which has a microstructure.

If the electrode assembly is not sufficiently impregnated with the electrolyte, the efficiency of charging and discharging by lithium ions decreases, which not only reduces the performance of the battery but also causes capacity deviation between battery cells.

In this regard, Korean Patent Application Publication No. 2016-0130646 discloses an electrolyte impregnation method including the steps of supplying an electrolyte to a cell including an electrode assembly in a vapor state under reduced pressure, condensing the electrolyte supplied to the cell in the vapor state, and impregnating the electrode assembly with the electrolyte in a vacuum atmosphere.

In addition, Korean Patent Application Publication No. 2019-0091048 discloses an electrolyte impregnation method including the steps of placing a secondary battery including an electrode assembly having an electrolyte injected thereinto in an impregnation chamber, pressurizing an inner space of the impregnation chamber to impregnate the electrode assembly with the electrolyte under a pressurized atmosphere for a predetermined pressurization time, and depressurizing the inner space of the impregnation chamber to impregnate the electrode assembly with the electrolyte under a vacuum atmosphere for a predetermined depressurization time.

That is, in the conventional method of impregnating the battery cell with the electrolyte, the depressurization and pressurization processes are performed after injection of the electrolyte.

However, for pressurization in a depressurized atmosphere lower than atmospheric pressure or for depressurization after pressurization, the waiting time is long until each unit process starts, whereby the impregnation process is not efficiently performed.

Furthermore, in the case of a cylindrical secondary battery, impregnation of a central part of a jelly-roll electrode assembly with an electrolyte may be reduced if the size of the battery is increased.

### (Prior Art Documents)

(Patent Document 1) Korean Patent Application Publication No. 2016-0130646
(Patent Document 2) Korean Patent Application Publication No. 2019-0091048

### [Disclosure]

### [Technical Problem]

The present invention has been made in view of the above problems, and it is an object of the present invention to provide an electrolyte impregnation method for secondary batteries capable of improving electrolyte impregnation efficiency.

It is another object of the present invention to provide an electrolyte impregnation method for secondary batteries capable of reducing the waiting time.

### [Technical Solution]

In order to accomplish the above objects, an electrolyte impregnation method for secondary batteries according to the present invention includes receiving a secondary battery in a pressurization chamber and adjusting a pressure in the pressurization chamber, wherein, in the step of adjusting the pressure, a pressurization step and a pressurization release step are performed twice or more.

Also, in the electrolyte impregnation method for secondary batteries according to the present invention, in the step of adjusting the pressure, a first pressurization step, a first pressurization release step, a second pressurization step, and a second pressurization release step may be sequentially performed.

Also, in the electrolyte impregnation method for secondary batteries according to the present invention, a third pressurization step and a third pressurization release step may be further performed after the second pressurization release step.

Also, in the electrolyte impregnation method for secondary batteries according to the present invention, a fourth pressurization step and a fifth pressurization release step may be further performed after the third pressurization release step.

Also, in the electrolyte impregnation method for secondary batteries according to the present invention, the pressurization force in each of the first pressurization step and the second pressurization step may range from 600 to 750 kPa.

Also, in the electrolyte impregnation method for secondary batteries according to the present invention, the pressurization holding time in each of the first pressurization step and the second pressurization step may range from 60 to 360 seconds.

Also, in the electrolyte impregnation method for secondary batteries according to the present invention, the pressurization holding time in the second pressurization step may be set to be longer than the pressurization holding time in the first pressurization step.

Also, in the electrolyte impregnation method for secondary batteries according to the present invention, the pressurization force in each of the first pressurization step, the second pressurization step, and the third pressurization step may range from 600 to 750 kPa.

Also, in the electrolyte impregnation method for secondary batteries according to the present invention, the pressurization holding time in each of the first pressurization step, the second pressurization step, and the third pressurization step may range from 60 to 360 seconds.

Also, in the electrolyte impregnation method for secondary batteries according to the present invention, the pressurization holding time may be set to be longer in order of the first pressurization step, the second pressurization step, and the third pressurization step.

Also, in the electrolyte impregnation method for secondary batteries according to the present invention, no depressurization step in which the pressure in the pressurization chamber is below atmospheric pressure may be included.

Also, in the electrolyte impregnation method for secondary batteries according to the present invention, the secondary battery may be a cylindrical battery or a prismatic battery.

In addition, the present invention provides a secondary battery impregnated by the electrolyte impregnation method.

### [Advantageous Effects]

As is apparent from the above description, in an electrolyte impregnation method for secondary batteries according to the present invention, a pressurization step of pressurizing a chamber having a secondary battery received therein and a pressurization release step are alternately performed, whereby it is possible to increase the electrolyte impregnation rate.

Also, in the electrolyte impregnation method for secondary batteries according to the present invention, a vacuum pressurization step of adjusting the pressure to sub-atmospheric pressure is omitted, whereby it is possible to reduce the waiting time of each step, which may contribute to improvement in impregnation process efficiency.

Furthermore, in the electrolyte impregnation method for secondary batteries according to the present invention, the vacuum pressurization step of adjusting the pressure to sub-atmospheric pressure is omitted, whereby it is possible to reduce the operation items and management items of an apparatus, which may contribute to improvement in the working environment.

### [Description of Drawings]

FIG. 1 is a perspective view of an electrolyte impregnation chamber.
FIG. 2 is a front view of the impregnation chamber shown in FIG. 1.
FIG. 3 is a side view of the impregnation chamber shown in FIG. 1.
FIG. 4 is a perspective view of a pallet for receiving secondary batteries.
FIG. 5 is an exploded photograph of battery cells with an impregnation process completed according to Example 1.
FIG. 6 is an exploded photograph of battery cells with an impregnation process completed according to Example 2.
FIG. 7 is an exploded photograph of battery cells with an impregnation process completed according to Example 3.
FIG. 8 is an exploded photograph of battery cells with an impregnation process completed according to Example 4.
FIG. 9 is an exploded photograph of battery cells with an impregnation process completed according to Example 5.
FIG. 10 is an exploded photograph of battery cells with an impregnation process completed according to a comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

An electrolyte impregnation method for secondary batteries according to the present invention includes a step of receiving a secondary battery in a pressurization chamber and a step of adjusting the pressure in the pressurization chamber, but does not include a vacuum step in which the pressure in the pressurization chamber is below atmospheric pressure.

Specifically, in the step of adjusting the pressure, it is preferable for a pressurization step and a pressurization release step of reducing the pressure to near atmospheric pressure to be performed twice or more.

For example, in the step of adjusting the pressure, a first pressurization step, a first pressurization release step, a second pressurization step, and a second pressurization release step may be sequentially performed.

In another example, a first pressurization step, a first pressurization release step, a second pressurization step, a second pressurization release step, a third pressurization step, and a third pressurization release step may be sequentially performed.

In a further example, a first pressurization step, a first pressurization release step, a second pressurization step, a second pressurization release step, a third pressurization step, a third pressurization release step, a fourth pressurization step, and a fifth pressurization release step may be sequentially performed.

Of course, it is obvious that pressurization step and pressurization release steps can be repeatedly performed after the fifth pressurization release step.

Meanwhile, the pressurization force in each pressurization step is preferably 600 to 750 kPa. If the pressurization force is less than 600 kPa, the electrolyte impregnation rate is low, and conversely, if the pressurization force exceeds 750 kPa, an electrode assembly may be damaged or the manufacturing cost of the pressurization chamber may greatly increase. Consequently, it is preferable for the pressurization force to be within the above range.

The pressurization holding time in each pressurization step may be 60 to 360 seconds, it is preferable for the pressurization holding times in the respective pressurization steps to be similar, and it is more preferable for the pressurization holding time to increase as the pressurization step is repeated.

In the present invention, the secondary battery is not particularly restricted as long as the secondary battery is a lithium secondary battery, and may be, for example, be a cylindrical secondary battery, a prismatic secondary battery, or a pouch-shaped secondary battery.

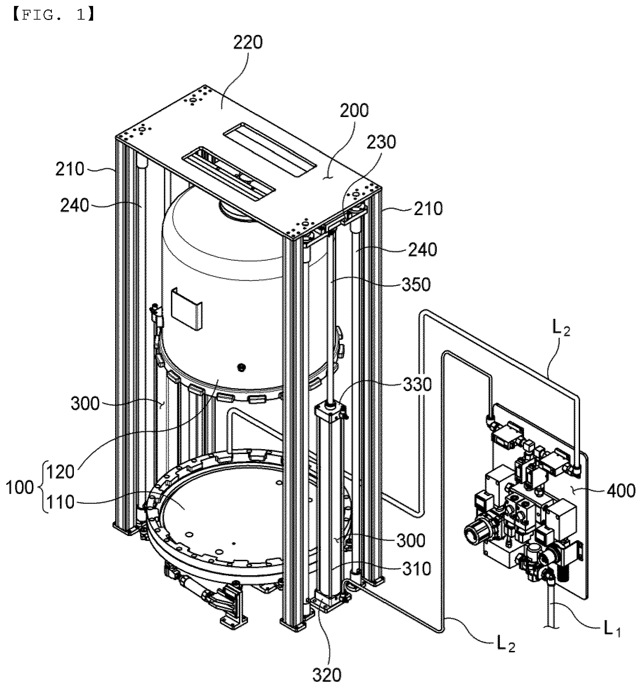

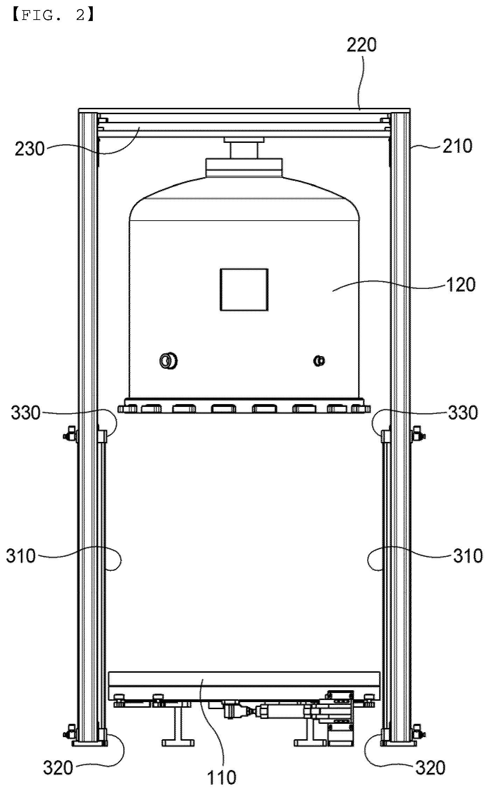

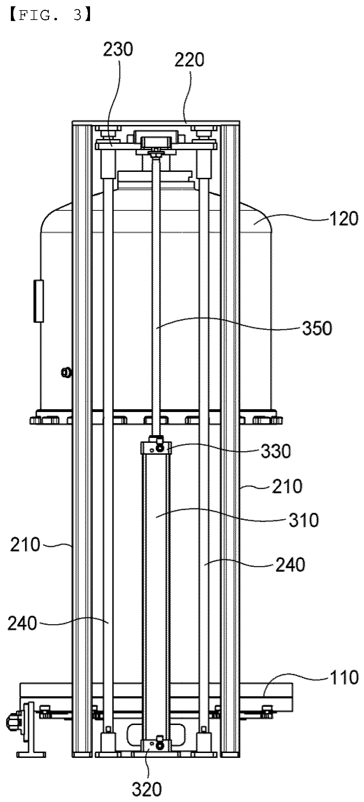

FIG. 1 is a perspective view of an electrolyte impregnation chamber, FIG. 2 is a front view of the impregnation chamber shown in FIG. 1, and FIG. 3 is a side view of the impregnation chamber shown in FIG. 1.

A liftable chamber may be used as a chamber for impregnating an electrode assembly of a secondary battery with an electrolyte, as shown in FIGs. 1 to 3. Of course, the chamber is not particularly restricted as long as it is possible to pressurize the secondary battery to a certain pressure and release the pressure applied to the secondary battery.

As shown in FIGs. 1 to 3, the electrolyte impregnation chamber may include a chamber body 100 configured to receive a secondary battery, a chamber frame 200 configured to enclose the chamber body 100, an air cylinder 300 configured to move a part of the chamber body 100 upward and downward, and a controller 400 configured to operate the air cylinder 300.

First, the chamber body 100 includes a lower body 110 and an upper body 120, wherein the lower body 110 may have an approximately circular plate-like structure. The upper body 120 may be located above the lower body 110, may be moved upward and downward, and may be hemispherical or semi-elliptical in overall shape with a hollow interior.

A secondary battery to be impregnated with an electrolyte is disposed on an upper surface of the lower body 110. Since pressurization and pressurization release must be alternately performed, it is preferable for the upper body 120 and the lower body 110 to be airtight so as to be isolated from the outside when in tight contact with each other and to be fastened to each other so as not to be separated from each other even when a predetermined level of pressure is applied thereinto.

Although not shown in the figures, the lower body 110 and/or the upper body 120 may be provided with a port (not shown) configured to supply gas into the chamber to pressurize the interior of the chamber to a predetermined pressure or to exhaust the gas to the outside.

The chamber frame 200 may include a vertical frame 210, a horizontal frame 220, a support plate 230, and a guide frame 240.

The vertical frame 210 may be provided in a pair so as to be located facing each other in the state in which the chamber body 100 is disposed therebetween. In this case, the vertical frame 210 located on each side may be provided in two so as to be located spaced apart from each other. Consequently, four vertical frames 210 may be provided; however, the present invention is not limited thereto.

The horizontal frame 220 is fixed to upper parts of the four vertical frames 210 and may have an approximately rectangular plate-like structure.

The support plate 230 is located between the horizontal frame 220 and the upper body 120, and is moved upward and downward by operation of the air cylinder 300 while fixing and supporting the upper body 120. Specifically, the support plate has a plate-like structure similar to the horizontal frame 220, wherein a piston rod 350 is connected near each of the edges of opposite sides facing each other, and the upper body 120 is connected near a low surface of the center of the support plate.

When the piston rod 350 is moved downward or upward, the support plate 230 is also moved downward or upward in the state in which the upper body 120 is suspended.

The guide frame 240 is configured to guide the support plate 230 such that the support plate can be stably moved upward and downward, and may be disposed so as to extend through the support plate 230 in a vertical direction. Specifically, the guide frame 240 is approximately rod-shaped, with a lower end facing downward and located so as to be in contact with the ground and the other end located so as to be in contact with a lower surface of the horizontal frame 220. The guide frame may be provided in four so as to extend through respective corners of the horizontal frame 220, but the number of the guide frames may be changed as needed.

The controller 400 controls the supply and exhaust of gas to operate the air cylinder 300.

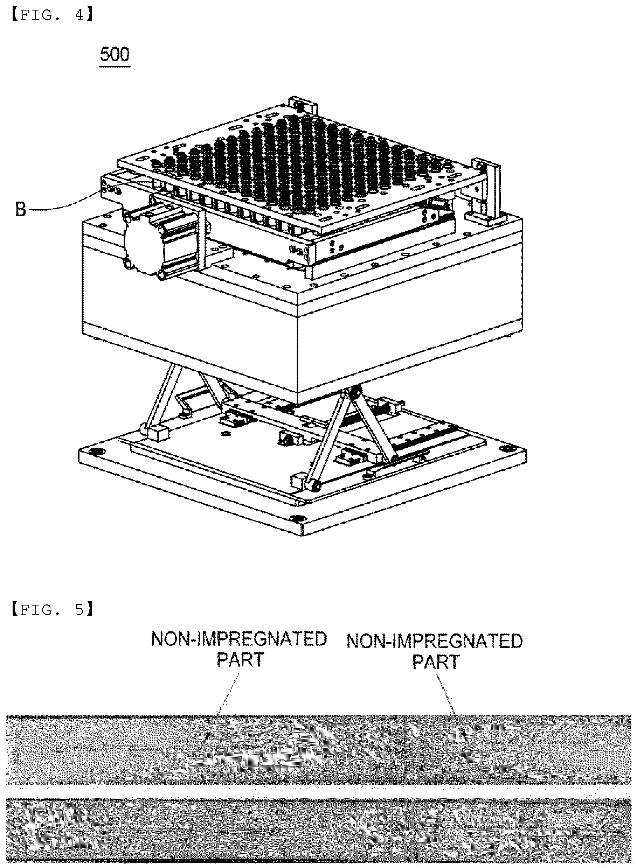

FIG. 4 is a perspective view of a pallet for receiving secondary batteries. An electrolyte is injected into each of the secondary batteries received in the pallet in the state in which upper parts of the secondary batteries are open. The pallet may be freely changed as long as the pallet can receive secondary batteries.

Hereinafter, the present invention will be described with reference to examples and an experimental example. However, the examples and the experimental example are provided only for easier understanding of the present invention and should not be construed as limiting the scope of the present invention.

### Example 1

A pallet (see FIG. 4) in which a plurality of cylindrical secondary batteries 21700 each having an electrolyte injected thereinto was received was loaded on a lower body having the configuration shown in FIG. 1, an upper body was moved downward such that the cylindrical secondary batteries were isolated from the outside, and the upper body and the lower body were brought into tight contact with each other.

Subsequently, a first pressurization step, a first pressurization release step, a second pressurization step, a second pressurization release step, a third pressurization step, and a third pressurization release step were sequentially performed to impregnate the secondary batteries with the electrolyte.

In the first pressurization step, nitrogen gas was supplied into a pressurization chamber until the pressure in the chamber reached 680 kPa, and the pressure in the chamber was maintained for 180 seconds after the pressure in the chamber reached 680 kPa. In the first pressurization release step, the nitrogen gas was exhausted such that the pressure in the chamber was equal to atmospheric pressure.

In the second pressurization step, nitrogen gas was supplied into the pressurization chamber until the pressure in the chamber reached 680 kPa, and the pressure in the chamber was maintained for 230 seconds after the pressure in the chamber reached 680 kPa. In the second pressurization release step, the nitrogen gas was exhausted such that the pressure in the chamber was equal to atmospheric pressure.

In the third pressurization step, nitrogen gas was supplied into the pressurization chamber until the pressure in the chamber reached 680 kPa, and the pressure in the chamber was maintained for 280 seconds after the pressure in the chamber reached 680 kPa. In the third pressurization release step, the nitrogen gas was exhausted such that the pressure in the chamber was equal to atmospheric pressure.

### Example 2

A first pressurization step, a first pressurization release step, a second pressurization step, a second pressurization release step, a third pressurization step, and a third pressurization release step were sequentially performed, and pressurization and pressurization release were alternately performed to impregnate secondary batteries with an electrolyte in the same manner as in Example 1, except that the pressure in the chamber was set to 650 kPA and the pressurization holding time was set to 180 seconds in each of the first to third pressurization steps.

### Example 3

A first pressurization step, a first pressurization release step, a second pressurization step, a second pressurization release step, a third pressurization step, a third pressurization release step, a fourth pressurization step, and a fourth pressurization release step were sequentially performed, and pressurization and pressurization release were alternately performed to impregnate secondary batteries with an electrolyte in the same manner as in Example 1, except that the pressure in the chamber was set to 700 kPA and the pressurization holding time was set to 120 seconds in each of the first to fourth pressurization steps.

### Example 4

A first pressurization step, a first pressurization release step, a second pressurization step, a second pressurization release step, a third pressurization step, and a third pressurization release step were sequentially performed, and pressurization and pressurization release were alternately performed to impregnate secondary batteries with an electrolyte in the same manner as in Example 1, except that the pressure in the chamber was set to 700 kPA and the pressurization holding time was set to 180 seconds in each of the first to third pressurization steps.

### Example 5

A first pressurization step, a first pressurization release step, a second pressurization step, a second pressurization release step, a third pressurization step, and a third pressurization release step were sequentially performed.

Pressurization and pressurization release were alternately performed to impregnate secondary batteries with an electrolyte in the same manner as in Example 1, except that the pressure in the pressurization chamber was 700 kPa and the pressurization holding time was 360 seconds in the first pressurization step, the pressure in the pressurization chamber was 700 kPa and the pressurization holding time was 60 seconds in the second pressurization step, and the pressure in the pressurization chamber was 700 kPa and the pressurization holding time was 60 seconds in the third pressurization step.

### Comparative example

A first depressurization step, a first pressurization step, a pressurization release step, a second pressurization step, a second depressurization step, a first depressurization release step, a third depressurization step, and a second depressurization release step were sequentially performed to impregnate secondary batteries with an electrolyte.

In the first depressurization step, the air in the chamber was exhausted until the pressure in the chamber reached -90 kPa, and the pressure in the chamber was maintained for 20 seconds. In the first pressurization step, nitrogen gas was supplied into the pressurization chamber until the pressure in the chamber reached 650 kPa, and the pressure in the chamber was maintained for 200 seconds after the pressure in the chamber reached 650 kPa. In the pressurization release step, the nitrogen gas was exhausted such that the pressure in chamber was equal to atmospheric pressure.

In the second pressurization step, nitrogen gas was supplied into the pressurization chamber until the pressure in the chamber reached 650 kPa, and the pressure in the chamber was maintained for 250 seconds after the pressure in the chamber reached 650 kPa.

In the second depressurization step, the air in the chamber was exhausted until the pressure in the chamber reached -30 kPa, and the pressure in the chamber was maintained for 10 seconds. In the first depressurization release step, outside air was introduced into the chamber such that the pressure in chamber was equal to atmospheric pressure.

In the third decompression step, the air in the chamber was exhausted until the pressure in the chamber reached -30 kPa, and the pressure in the chamber was maintained for 10 seconds. In the second depressurization release step, outside air was introduced into the chamber such that the pressure in the chamber was equal to atmospheric pressure.

**[Table 1]**

| | Impregnation conditions |
|---|---|
| Example 1 | Pressurization (180s, 680 kPa) - pressurization release - pressurization (230s, 680 kPa) - pressurization release - pressurization (280s, 680 kPa) - pressurization release |
| Example 2 | Pressurization (180s, 650 kPa) - pressurization release - pressurization (180s, 650 kPa) - pressurization release - pressurization (180s, 650 kPa) - pressurization release |
| Example 3 | Pressurization (120s, 700 kPa) - pressurization release - pressurization (120s, 700 kPa) - pressurization release - pressurization (120s, 700 kPa) - pressurization release - pressurization (120s, 700 kPa) - pressurization release |
| Example 4 | Pressurization (180s, 700 kPa) - pressurization release - pressurization (180s, 700 kPa) - pressurization release - pressurization (180s, 700 kPa) - pressurization release |
| Example 5 | Pressurization (360s, 700 kPa) - pressurization release - pressurization (60s, 700 kPa) - pressurization release - pressurization (60s, 700 kPa) - pressurization release |
| Comparative example | Depressurization (20s, -90 kPa) - Pressurization (200s, 650 kPa) - pressurization release - pressurization (250s, 650 kPa) - depressurization (10s, -30 kPa) - depressurization release - depressurization (10s, -30 kPa) - depressurization release |

### Experimental example

The cylindrical battery cells with the electrolyte impregnation process finished under the conditions of the examples and the comparative example were disassembled, and non-impregnated parts were visually inspected.

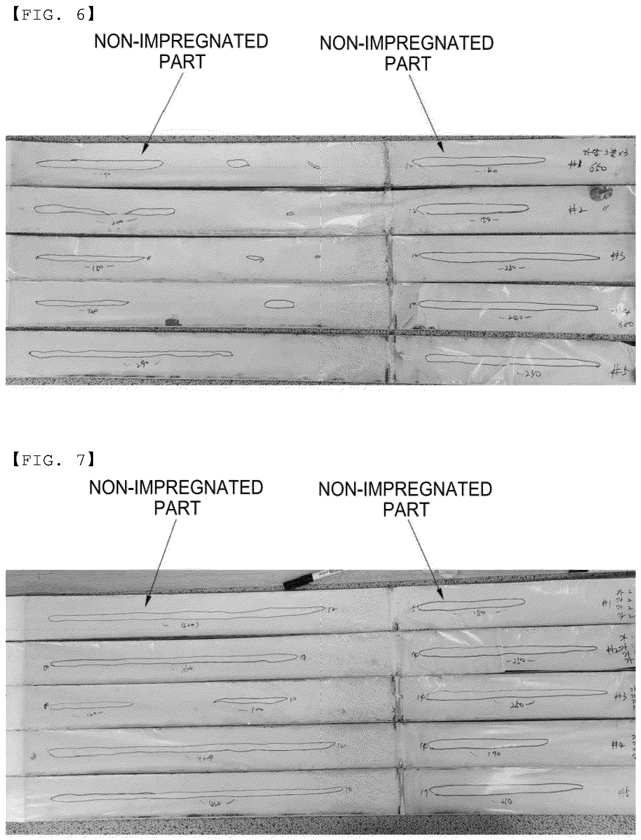

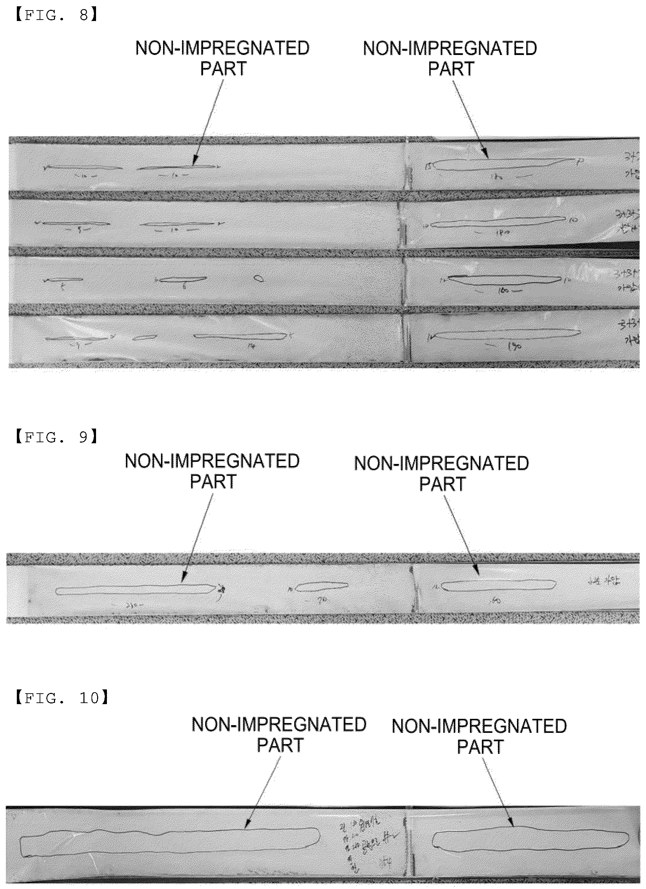

FIG. 5 is an exploded photograph of the battery cells with the impregnation process completed according to Example 1, FIG. 6 is an exploded photograph of the battery cells with the impregnation process completed according to Example 2, and FIG. 7 is an exploded photograph of the battery cells with the impregnation process completed according to Example 3. In addition, FIG. 8 is an exploded photograph of the battery cells with an impregnation process completed according to Example 4, and FIG. 9 is an exploded photograph of the battery cells with the impregnation process completed according to Example 5. FIG. 10 is an exploded photograph of the battery cells with the impregnation process completed according to a comparative example.

In FIGs. 5 to 10, the marked parts indicate the parts that have not been impregnated with the electrolyte, and the other parts indicate the parts that have been impregnated with the electrolyte.

First, it can be seen from FIG. 10, which shows the results of the comparative example, that a large area of the separator is not wetted by the electrolyte in the state in which a jelly-roll is unwound.

In contrast, it can be seen from FIGs. 5 to 10, which shows the results of Examples 1 to 5, that the area that was not wetted by the electrolyte was significantly reduced. In particular, as can be seen from FIGs. 5 and 8, the electrolyte impregnation rate is increased when the pressurization holding times in the respective pressurization steps are set to the same or when the pressurization holding time is set such that the pressurization holding time in the following step is longer than the pressurization holding time in the preceding step.

Those skilled in the art to which the present invention pertains will appreciate that various applications and modifications are possible within the category of the present invention based on the above description.

### (Description of Reference Symbols)

100: Chamber body
110: Lower body
120: Upper body
200: Chamber frame
210: Vertical frame
220: Horizontal frame
230: Support plate
240: Guide frame
300: Air cylinder
310: Cylinder tube
320: Head cover
330: Rod cover
350: Piston rod
400: Controller
500: Pallet
B: Secondary battery
L1: First gas pipe
L2: Second gas pipe

## Claims

1. An electrolyte impregnation method for secondary batteries, the electrolyte impregnation method comprising:
receiving a secondary battery in a pressurization chamber; and
adjusting a pressure in the pressurization chamber,
wherein, in the step of adjusting the pressure, a pressurization step and a pressurization release step are performed twice or more.

2. The electrolyte impregnation method according to claim 1, wherein, in the step of adjusting the pressure, a first pressurization step, a first pressurization release step, a second pressurization step, and a second pressurization release step are sequentially performed.

3. The electrolyte impregnation method according to claim 2, wherein a third pressurization step and a third pressurization release step are further performed after the second pressurization release step.

4. The electrolyte impregnation method according to claim 3, wherein a fourth pressurization step and a fifth pressurization release step are further performed after the third pressurization release step.

5. The electrolyte impregnation method according to claim 2, wherein a pressurization force in each of the first pressurization step and the second pressurization step ranges from 600 to 750 kPa.

6. The electrolyte impregnation method according to claim 5, wherein a pressurization holding time in each of the first pressurization step and the second pressurization step ranges from 60 to 360 seconds.

7. The electrolyte impregnation method according to claim 6, wherein the pressurization holding time in the second pressurization step is set to be longer than the pressurization holding time in the first pressurization step.

8. The electrolyte impregnation method according to claim 3, wherein a pressurization force in each of the first pressurization step, the second pressurization step, and the third pressurization step ranges from 600 to 750 kPa.

9. The electrolyte impregnation method according to claim 8, wherein a pressurization holding time in each of the first pressurization step, the second pressurization step, and the third pressurization step ranges from 60 to 360 seconds.

10. The electrolyte impregnation method according to claim 9, wherein the pressurization holding time is set to be longer in order of the first pressurization step, the second pressurization step, and the third pressurization step.

11. The electrolyte impregnation method according to claim 1, comprising no depressurization step in which the pressure in the pressurization chamber is below atmospheric pressure.

12. The electrolyte impregnation method according to claim 1, wherein the secondary battery is a cylindrical battery or a prismatic battery.

13. A secondary battery impregnated by the electrolyte impregnation method according to any one of claims 1 to 12.
